# EUROPÄISCHE PATENTANMELDUNG

(11) **EP 2 047 918 A1**
(43) Veröffentlichungstag der Anmeldung: **15.04.2009**
(21) Anmeldenummer: 07118040.0
(22) Anmeldetag: 08.10.2007
(51) Int. Cl.: B09B 3/00

(54) **Verfahren und Vorrichtung zur Verarbeitung von Asbestzement**

(71) Anmelder: MCT-Establishment, 9487 Gamprin (LI)
(72) Erfinder: Kanzler, Walter, 8010 Graz (AT)
(74) Vertreter: Sajda, Wolf E.

(57) **Zusammenfassung**

Es werden ein Verfahren und eine Vorrichtung zur Verarbeitung von Asbestzement in umweltverträgliche Wertstoffe angegeben. Der Asbestzement wird unter Schwarzbereichsbedingungen mit Unterdruckhaltung grob zerkleinert und anschließend einer Hochtemperaturbehandlung zur Modifizierung der Gitterstruktur des Asbestanteils unterzogen. Der in Kunststoffgebinden verpackte Asbestzement (12) wird mitsamt der Kunststoffverpackung mit einem schneidenden Zerkleinerer (20) grob zerkleinert. Das grob zerkleinerte Material wird anschließend in einem thermischen Reaktor (30) bei einer Temperatur von bis zu 1400 °C dehydratisiert und gegebenenfalls decarbonatisiert. Das derart vorbehandelte Produkt wird danach abgekühlt (36) und gegebenenfalls in einem Mahlwerk (46) fein zerkleinert.

## Beschreibung

Die Erfindung betrifft ein Verfahren sowie eine Vorrichtung zur Verarbeitung von Asbestzement, insbesondere von stückigem Asbestzementmaterial, in umweltverträgliche Wertstoffe, wobei der Asbestzement unter Schwarzbereichsbedingungen mit Unterdruckhaltung grob zerkleinert und anschließend einer Hochtemperaturbehandlung zur Modifizierung der Gitterstruktur des Asbestanteils unterzogen wird.

Die Deponierung von Asbestzementplatten, die aus vorhandenen älteren Bauwerken stammen, bringt immer größere Probleme mit sich, weil Asbestzement wegen der Gefährlichkeit seiner Asbestfasern nur auf Sondermülldeponien gelagert werden darf. Es besteht daher ein zunehmender Bedarf, derartige Asbestzementmaterialien in umweltverträgliche Wertstoffe umzuwandeln.

Asbestzement besteht meistens zu etwa 15 % aus Chrysotil-Fasern und zu 85 % aus Portland-Zement. Chrysotil besteht typischerweise aus etwa 49 % Siliziumdioxid, 48 % Magnesiumoxid, sowie Aluminiumoxid und Eisenoxid. Die Chrysotil-Fasern geben bei 600 °C bis 1000 °C ihr Kristallwasser ab und zerfallen dabei zu Staub. Aus dem Chrysotil bildet sich dabei Forsterit, das aber keine guten hydraulischen Eigenschaften besitzt.

Die DE-A-40 35 358 beschreibt ein Verfahren zur Entsorgung von asbesthaltigen Massen, die nach einer Befeuchtung von einem Substrat abgelöst und anschließend entsorgt werden. Dabei wird die Asbestmasse unter gründlicher Befeuchtung mit Wasser und Strahlsand abgetragen, gegebenenfalls entfeuchtet und anschließend in einem Ofen bei Temperaturen in der Größenordnung von 750 °C bis 1250 °C thermisch behandelt.

In der DE-A-43 305 51 ist ein Verfahren zur umweltschonenden Entsorgung von Mineralfasern und deren Überführung in Wertstoffe beschrieben, wobei die mineralfaserhaltigen Materialien in Mühlen gemahlen werden und anschließend in einem aufwendigen Mischverfahren mit dosierten Mengen von Zuschlagstoffen vermischt werden, woraufhin eine thermische Behandlung bei Temperaturen von 1250 °C bis 1450 °C erfolgt, um auf diese Weise einen brauchbaren Zement zu erhalten.

Die DE-A-42 11 161 ist ein Verfahren zur Entsorgung von Asbest und asbesthaltigen Abfallstoffen bekannt, wobei eine chemisch-morphologische Asbestumwandlung in nicht-wäßrigen Stoffsystemen bei Temperaturen bis maximal 1300 °C vorgenommen wird. Zu diesem Zweck werden Zuschlagstoffe, wie etwa Borsäure, Phosphorsäure, Ammoniumdihydrogenphosphat, Kalziumchlorid, Eisenchlorid, Natriumhydrogensulfat oder dergleichen hinzugefügt. Ein derartiges Verfahren sowie auch das vorherige Verfahren leiden unter dem Nachteil, daß erst mit kompliziert einzustellenden Rezepturen und erheblichen Kosten ein Umwandlungsprozeß durchgeführt werden kann, mit dem sich brauchbarer Zement herstellen läßt.

Aus der WO98/02392 ist ein Verfahren zur Entsorgung von Faserzementabfallprodukten bekannt, wobei die zu entsorgenden Faserzementabfallprodukte lediglich einer Grobzerkleinerung unterworfen werden und das so zerkleinerte Gut in einen Drehrohrofen in der Ofenzone von 800 °C zugegeben wird. Daran schließen sich weitere thermische Behandlungen unter Schmelzbildung an, so daß das Material zu Zementklinker umgewandelt und dann zu Zement vermahlen wird. Das dort beschriebene Verfahren hat allerdings den Nachteil in der Praxis, daß kein Zementwerk ein mit Asbestfasern kontaminiertes Material mit dem Rauchgas in Kontakt bringen will.

Die DE-A-44 11 324 beschreibt ein Verfahren zur Entsorgung von Asbestzement-Bauelementen im Hinblick auf eine Wertstoffrückgewinnung, wobei die asbesthaltigen Massen mit einem thermisch initiierten Umwandlungsprozeß unter Beifügung von Zusatzstoffen bei einer Temperatur von mindestens 1050 °C behandelt werden, damit die ursprünglich asbesthaltigen Massen dann schließlich als asbestfreie mineralische Bindemittel in zementähnlicher Konfiguration vorliegen. Auf diese Weise können daraus Bestandteile von brauchbaren Zementen werden. Auch in diesem Falle ist eine aufwendige Einstellung der jeweiligen Zusatzstoffe erforderlich, was entsprechenden Aufwand und Kosten mit sich bringt.

Die DE-A-44 23 728 beschreibt schließlich ein Verfahren zur Behandlung und umweltverträglichen Verwertung von Asbestzementprodukten, wobei eine Feinvermahlung von Asbestzement und ein nachfolgendes Einblasen des mehlförmigen Zwischenproduktes in die Flamme eines Zementofens bei 1800 °C in einer Menge von 2 % bis 5 % des produzierten Zementes erfolgt. Dieses herkömmliche Verfahren hat allerdings den Nachteil, daß der Asbestzement vor der Zugabe mit hohem Energieaufwand vermahlen werden muß; gleichwohl besteht die Gefahr der Kontamination des Zementwerkes durch Asbestfasern.

Zusammenfassend ist festzustellen, daß die bisher bekannten Verfahren insofern unzulänglich und wirtschaftlich wenig erfolgreich sind, weil die Verfahren entweder nur in Verbindung mit einem herkömmlichen Zementofen arbeiten oder aber das aufwendige Bemessen und Hinzufügen von Zuschlagstoffen erfordern, wenn überhaupt wirklich brauchbare Produkte hergestellt werden sollen.

Der Erfindung liegt daher die Aufgabe zugrunde, ein Verfahren und eine Vorrichtung zur Verarbeitung von Asbestzement in umweltverträgliche Wertstoffe anzugeben, mit denen mit verringertem Aufwand und ohne die Zugabe von Zuschlagstoffen verwertbare Zementzusätze bzw. Zemente hergestellt werden können.

Mit dem Verfahren und der Vorrichtung gemäß der Erfindung wird die Aufgabe in zufriedenstellender Weise gelöst. Dabei wird zugleich der Vorteil erreicht, daß die Faseremissionen auf ein absolutes Minimum beschränkt werden und auch der Energieeinsatz verringert werden kann. Dabei ist es in vorteilhafter Weise nicht erforderlich, den Vorgang der Dekontaminierung des Asbestzementmaterials in einem herkömmlichen Zementwerk durchzuführen, so daß eine Kontaminierung von großen Teilen einer Zementherstellungsanlage sowie eine unwirtschaftliche Zementherstellung vermieden werden.

Das erfindungsgemäße Verfahren zur Verarbeitung von Asbestzement in umweltverträgliche Wertstoffe, bei dem der Asbestzement unter Schwarzbereichsbedingungen mit Unterdruckhaltung grob zerkleinert und anschließend einer Hochtemperaturbehandlung zur Modifizierung der Gitterstruktur des Asbestanteils unterzogen wird, ist dadurch gekennzeichnet, daß der in Kunststoffgebinden verpackte Asbestzement mitsamt der Kunststoffverpackung mit einem schneidenden Zerkleinerer grob zerkleinert wird, daß das grob zerkleinerte Material anschließend in einem thermischen Reaktor bei einer Temperatur von bis zu 1400 °C dehydratisiert und gegebenenfalls decarbonatisiert wird und daß das derart vorbehandelte Produkt danach abgekühlt und gegebenenfalls fein zerkleinert wird.

Das zu verarbeitende Asbestzement-Ausgangsmaterial steht für diese Zwecke in geschützter Form in Großgebinden, insbesondere in Umhüllungen aus Polyethylen zur Verfügung, die üblicherweise als sog. Big Bags geliefert werden und ensprechende Stücke und/oder Platten aus Asbestzement enthalten.

In Weiterbildung des erfindungsgemäßen Verfahrens wird der verpackte Asbestzement auf eine Stückgröße von 5 mm bis 150 mm, insbesondere etwa 10 mm bis 80 mm, grob zerkleinert. Zu diesem Zweck wird zweckmäßigerweise als Zerkleinerer ein Mehrwellen-Zerkleinerer, insbesondere ein Vierwellen-Zerkleinerer mit Schneidscheiben eingesetzt, bei dem jeweils eine Schneidscheibe zwischen Schneidscheiben gegenüberliegender Wellen eingreift. Die Schneidscheiben können zweckmäßigerweise einen Durchmesser von etwa 200 mm bis 300 mm und eine Stärke von etwa 20 mm bis 800 mm aufweisen und, über ihren Umfang verteilt, drei oder mehr radial vorstehende Messer an ihrem Umfang tragen.

Gemäß dem erfindungsgemäßen Verfahren wird die Behandlung im thermischen Reaktor etwa 0,5 Stunden bis 2 Stunden, insbesondere etwa 0,75 Stunden bis 1,25 Stunden lang durchgeführt.

In Weiterbildung des erfindungsgemäßen Verfahrens ist vorgesehen, daß die Behandlung im thermischen Reaktor zur Einstellung der hydraulischen Eigenschaften des Verfahrenserzeugnisses bei einer Temperatur von mehr als 1000 °C, insbesondere bei einer Verweilzeit von etwa 1 Stunde, im thermischen Reaktor durchgeführt wird.

In Weiterbildung des erfindungsgemäßen Verfahrens ist vorgesehen, daß die Behandlung des Asbestmaterials im thermischen Reaktor bei einem Temperaturbereich von 1150 °C bis 1300 °C, insbesondere 1200 °C bis 1250 °C erfolgt.

Zu diesem Zweck wird bei dem erfindungsgemäßen Verfahren vorzugsweise ein Drehrohrofen, ein Wirbelschichtreaktor, ein Reaktor mit einer Gas- oder Plasmaflamme, ein Heißluft-Bandofen oder ein Etagenofen eingesetzt.

Nach der thermischen Behandlung wird das erhaltene Verfahrenserzeugnis beim erfindungsgemäßen Verfahren auf eine Feinheit von 2500 bis 4000 Blaine fein verkleinert bzw. gemahlen. Zu diesem Zweck wird zweckmäßigerweise eine Kugelmühle oder eine Prallmühle für die Vermahlung verwendet.

Zweckmäßigerweise erfolgt der Verfahrensablauf vom Grobzerkleinern bis zur Behandlung im thermischen Reaktor unter Schwarzbereichsbedingungen, wobei dies mit einem anfänglichen Unterdruck von 1 bis 3 mbar gegenüber der Umgebungsatmosphäre erfolgt. Auch im thermischen Reaktor wird gegenüber der Umgebungsatmosphäre ein Unterdruck von 1 bis 3 mbar eingestellt. Sämtliche Manipulationen mit dem asbestfaserhaltigen Material werden dabei unter Schwarzbereichsbedingungen durchgeführt.

Beim erfindungsgemäßen Verfahren wird das Verfahrenserzeugnis nach der Behandlung im thermischen Reaktor auf etwa 50 °C bis 200 °C, insbesondere etwa 75 °C bis 90 °C abgekühlt. Dies erfolgt zweckmäßigerweise in einer Kühltrommel.

In Weiterbildung des erfindungsgemäßen Verfahrens ist vorgesehen, daß in dem thermischen Reaktor, insbesondere in einem Drehrohrofen, Rauchgase mit einer Temperatur von etwa 400 °C bis 800 °C, insbesondere etwa 450 °C bis 550 °C abgezogen werden, diese anschließend in einem Heißgasfilter von mitgerissenem Staub und Fasermaterial vorgereinigt und dann in einer nachfolgenden Brennkammer mit einer Flamme bei etwa 800 °C bis 1000 °C, insbesondere etwa 850 °C bis 950 °C nachverbrannt werden. Die Nachverbrennung erfolgt bei mindestens etwa 900 °C mindestens etwa 2 Sekunden lang, um einschlägigen Emissionsrichtlinien Rechnung zu tragen.

Weiterhin ist bei dem Verfahren vorgesehen, daß die nachverbrannten Gase in einem Abhitzekessel/Wärmetauscher auf weniger als etwa 200 °C, insbesondere weniger als etwa 180 °C abgekühlt und dann einer Feinfiltration unterzogen werden. Als Heißgasfilter wird zweckmäßigerweise ein Kerzenfilter mit Keramikfaserkerzen eingesetzt. Die erfindungsgemäße Vorrichtung zur Verarbeitung von Asbestzement, insbesondere stückigem Asbestzementmaterial, in umweltverträgliche Wertstoffe weist folgendes auf:
einen schneidenden Zerkleinerer, der das in Kunststoff-Gebinden verpackte Asbestzementmaterial in einem Schwarzbereich durch eine Schleuse von einem Förderer erhält und grob zerkleinert;
einen an den Schwarzbereich angeschlossenen, nachgeschalteten thermischen Reaktor, insbesondere einen Drehrohrofen, in welchem das grob zerkleinerte Material im Gegenstrom zu den Brenngasen bei Temperaturen bis zu 1400 °C dehydratisiert und
gegebenenfalls decarbonatisiert wird;
eine Kühleinrichtung, in der das Material auf eine Temperatur unter 100 °C für die Weiterverarbeitung abgekühlt wird; und
eine an den thermischen Reaktor angeschlossene Rauchgasbehandlungseinrichtung, in der die Rauchgase gereinigt und einer thermischen Nachbehandlung unterzogen werden.

In Weiterbildung der erfindungsgemäßen Vorrichtung ist als Zerkleinerer ein Mehrwellenzerkleinerer, insbesondere ein Vierwellenzerkleinerer vorgesehen. Die ineinandergreifenden Schneidscheiben von benachbarten Wellen sorgen für die entsprechende wirkungsvolle Zerkleinerung des Asbestzementmaterials, ohne daß dieses vorher aus seiner schützenden Verpackung ausgepackt zu werden braucht.

In Weiterbildung der erfindungsgemäßen Vorrichtung ist vorgesehen, daß die Rauchgasbehandlungseinrichtung ein Heißgasfilter, eine nachgeschaltete Brennkammer und daran anschließend einen Abhitzekessel bzw. einen Wärmetauscher sowie eine Feinfiltrationseinheit aufweist. Das Heißgasfilter ist zweckmäßigerweise als Kerzenfilter mit Keramikfaserkerzen ausgebildet.

Die Erfindung wird nachstehend, auch hinsichtlich weiterer Merkmale und Vorteile, anhand der Beschreibung von Ausführungsbeispielen und unter Bezugnahme auf die beiliegende Zeichnung näher erläutert.

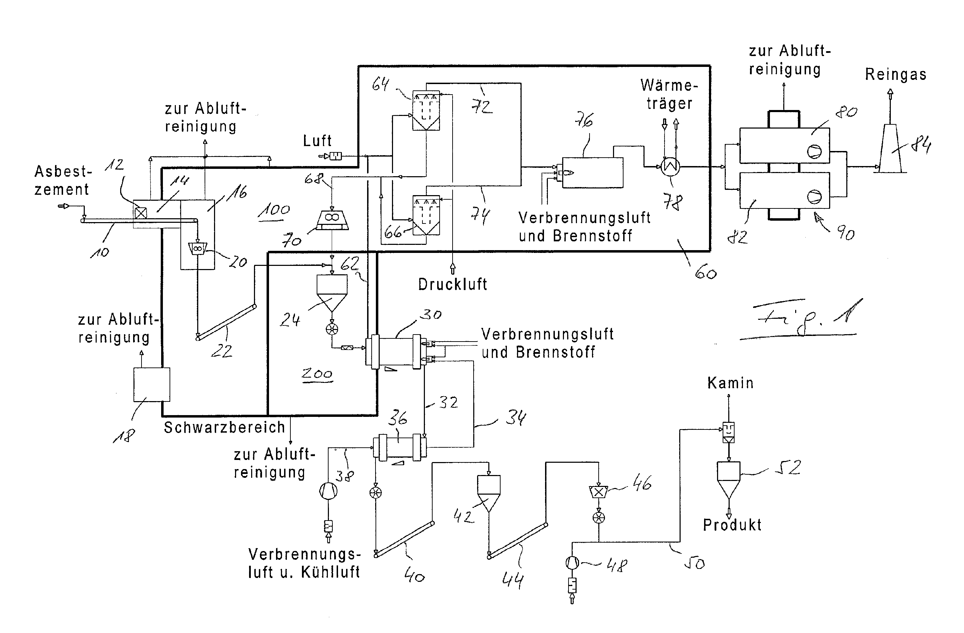

Die einzige Figur1 der Zeichnung zeigt den schematischen Aufbau einer Vorrichtung für die Realisierung eines Verfahrens zur Verarbeitung von Asbestzement in umweltverträgliche Wertstoffe.

Im Eingangsbereich der erfindungsgemäßen Vorrichtung erkennt man einen schematisch angedeuteten ersten Schwarzbereich 100, der einen Förderer 10 aufweist, über den ein zu verarbeitendes Asbestzement-Material als Ausgangsmaterial 12 durch eine erste Schleuse 14 in den Schwarzbereich 100 eingebracht wird. Ein derartiger Schwarzbereich ist ein baulich dicht abgetrennter Raum, in welchem bei der Verarbeitung zwangsläufig Fasern freigesetzt werden, die aber an einer willkürlichen Ausbreitung gehindert und gezielt abgeführt werden.

Zu diesem Zweck ist der Schwarzbereich mit einem Saugventilator und einer Vorrichtung zur geregelten Luftzufuhr ausgeführt, wobei der Saugventilator den Raum des Schwarzbereiches unter einem vorgegebenen Unterdruck hält und die entsprechenden Gebläse aus Sicherheitsgründen redundant ausgeführt sind. Die abgesaugte Raumluft wird über eine dreistufige Filteranlage gereinigt, um Kontaminationen so weit wie möglich auszuschließen.

Der Förderer 10 fördert das Ausgangsmaterial 12 in eine zweite Schleuse 16, die einen Zerkleinerer 20 aufweist. Dabei handelt es sich zweckmäßigerweise um einen Vierwellenzerkleinerer, in welchem das zugeführte Asbestzementmaterial einschließlich seiner Verpackung grob zerkleinert wird und dann über einen Förderer 22 in einen Zwischenbehälter 24 eingebracht wird, der sich in einem zweiten Schwarzbereich 200 befindet.

Der Zerkleinerer 20 ist als Mehrwellenzerkleinerer, insbesondere als Vierwellenzerkleinerer mit Schneidscheiben ausgebildet, wobei jeweils eine Schneidscheibe zwischen Schneidscheiben einer gegenüberliegenden Welle eingreift. Die Schneidscheiben haben dabei vorzugsweise einen Durchmesser von etwa 200 mm bis 300 mm und eine Stärke von etwa 20 mm bis 800 mm, wobei fallweise auch andere Dimcnsionierungen gewählt werden können. Wichtig ist hierbei, daß das eingetragene stückige oder plattenförmige Asbestzementmaterial auf eine geeignete Stückgröße von 5 mm bis 150 mm, vorzugsweise von 10 mm bis 80 mm grob zerkleinert werden kann.

An ihrem Umfang sind die Schneidscheiben mit mehreren, beispielsweise drei oder mehr radial vorstehenden Messern versehen, die vom Umfang klauenartig radial nach außen vorstehen, etwa in der Größenordnung von 30 mm bis 50 mm, und in den Raum hineingreifen, der von der benachbarten Welle und den daran angebrachten Schneidscheiben gebildet bzw. begrenzt ist. Bei 18 ist noch schematisch eine weitere Schleuse, beispielsweise eine Personalschleuse angedeutet.

Der Zwischenbehälter 24 ist über eine Zellradschleuse und einen Schneckenförderer an einen thermischen Reaktor 30 angeschlossen, so daß das grob zerkleinerte Material unter Schwarzbereichsbedingungen in den thermischen Reaktor 30 eingebracht wird.

Bei dem thermischen Reaktor 30 handelt es sich vorzugsweise um einen Drehrohrofen, jedoch kann auch ein Wirbelschichtreaktor, ein Reaktor mit einer Gas- oder Plasmaflamme, ein Heißluft-Bandofen oder ein Etagenofen zum Einsatz gelangen.

In dem thermischen Reaktor 30 wird unter Zuführung von Verbrennungsluft und Brennstoff eine Aufheizung im Gegenstrom von 20 °C auf etwa 1250 °C vorgenommen. Die Behandlung des grob zerkleinerten Materials in diesem thermischen Reaktor 30 dauert in Abhängigkeit von den jeweiligen Gegebenheiten etwa 0,5 Stunden bis 2 Stunden, insbesondere etwa 0,75 Stunden bis 1,25 Stunden.

Dabei ist es zweckmäßig, wenn die Behandlung in dem thermischen Reaktor 30 zur Einstellung der hydraulischen Eigenschaften des herzustellenden Verfahrenserzeugnisses bei einer Temperatur von mehr als 1000 °C, insbesondere bei einer Verweilzeit von etwa 1 Stunden im thermischen Reaktor 30 durchgeführt wird. Insbesondere kann die Behandlung des Asbestmaterials in dem thermischen Reaktor 30 in der Endphase in einem Temperaturbereich von 1150 °C bis 1300 °C, insbesondere bei 1200 °C bis 1250 °C erfolgen.

Das auf diese Weise thermisch behandelte Material wird über eine Leitung 32 in eine Kühleinrichtung 36 eingebracht, bei der es sich insbesondere um eine Kühltrommel handelt. Diese arbeitet im Gegenstrom; zu diesem Zweck wird Kühlluft über ein Gebläse und eine Leitung 38 in die Kühleinrichtung 36 eingebracht, damit das Verfahrenserzeugnis auf eine Temperatur von etwa 50 °C bis 200 °C, insbesondere etwa 75 °C bis 90 °C abgekühlt wird.

Auf diese Weise kann das abgekühlte Verfahrenserzeugnis dann problemlos weitertransportiert und noch weiterverarbeitet werden. Diese im Gegenstrom zugeführte Kühlluft kann dann nach dem Durchgang durch die Kühleinrichtung 36 über eine Leitung 34 dem thermischen Reaktor 30 als Verbrennungsluft zugeführt werden.

Auf diese Weise kann eine gewisse Material- und Energieeinsparung erfolgen, wenn diese bereits vorgewärmte Luft im thermischen Reaktor 30 zum Einsatz gelangt.

Das Verfahrenserzeugnis wird dann aus der Kühleinrichtung 36 über eine Zellradschleuse und einen Förderer 40 in einen Zwischenbehälter 42 gefördert. Von dort gelangt das Verfahrenserzeugnis über einen weiteren Förderer 44 in ein Mahlwerk 46, insbesondere eine Kugelmühle oder eine Prallmühle, in der das Verfahrenserzeugnis fein zerkleinert bzw. fein zermahlen wird. Dabei wird das Produkt auf eine Feinheit von 2500 bis 4000 Blaine gemahlen.

Aus dem Mahlwerk 46 wird das feinvermahlene Endprodukt dann beispielsweise mit einer pneumatischen Förderung in einen Behälter 52 eingetragen. Zu diesem Zweck ist eine Leitung 50 vorgesehen, an die ein Gebläse 48 angeschlossen ist.

Der thermische Reaktor 30 ist seinerseits an eine Rauchgasbehandlungseinrichtung angeschlossen, die allgemein mit dem Bezugszeichen 60 bezeichnet ist. Zu diesem Zweck führt eine Leitung 62 von dem thermischen Reaktor 30 zu parallelgeschalteten Heißgasfiltern 64 und 66, die aus Sicherheitsgründen redundant ausgebildet sind. Selbstverständlich können auch mehr parallel geschaltete derartige Heißgasfilter vorgesehen sein.

Die Heißgasfiltern 64 und 66 sind zweckmäßigerweise als Kerzenfilter mit Keramikfaserkerzen ausgebildet. Sie können beispielsweise einen Außendurchmesser von 150 mm sowie eine Kerzenlänge von 2000 mm besitzen. Bei einen Durchsatz von 100 m³/h pro Kerze besitzt der Fasergehalt nach dem Durchgang durch diese Filterkerzen nur noch einen Wert von weniger als 1000 Fasern/m³. Diesen Heißgasfiltern 64 und 66 werden die Rauchgase mit einer Temperatur von 400 °C bis 800 °C, insbesondere etwa 450 °C bis 550 °C zugeführt, so daß die Rauchgase dort von mitgerissenem Staub und Fasermaterial vorgereinigt werden.

An diese Heißgasfilter 64 und 66 ist eine nachgeschaltete Brennkammer 76 über Leitungen 72 und 74 angeschlossen. In dieser Brennkammer 76 erfolgt eine Nachverbrennung mit einer Flamme bei etwa 800 °C bis 1000 °C, insbesondere etwa 850 °C bis 950 °C. Dies hängt von den jeweiligen Schutzvorschriften ab, die beispielsweise vorschreiben, daß bei der Gefahr von Dioxinbildung eine derartige Nachverbrennung mindestens bei 900 °C mit 2 Sekunden Verweilzeit erfolgen muß.

An diese nachgeschaltete Brennkammer 76 ist ein Abhitzekessel bzw. ein Wärmetauscher 78 angeschlossen, in welchem die nachverbrannten Gase dann auf weniger als etwa 200 °C, insbesondere weniger als etwa 180 °C abgekühlt werden. Anschließend werden diese nachverbrannten Gase dann in einer Saugzug-Ventilatoreinrichtung 90 mit Feinstfiltern 80 und 82 einer Feinfiltration unterzogen, wobei diese Feinstfilter 80 und 82 ebenfalls redundant ausgebildet sind und ihrerseits an einen Kamin 84 angeschlossen sind, aus dem dann das Reingas abgelassen werden kann.

Die Heißgasfilter 64 und 66 sind außerdem jeweils mit einem Sammelbehälter für abgeschiedene Staubmaterialien versehen, die über eine Leitung 68 an einen Kompaktierer 70 angeschlossen sind, damit ihm diese ausgefilterten Feststoffmaterialien zugeführt und weiterverarbeitet werden können. Dieses beispielsweise mit einem Bindemittel verfestigte Material wird dann dem Behälter 24 zugeführt und von dort erneut in den thermischen Reaktor 30 zur Verarbeitung eingeleitet.

Mit dem Verfahren und der Vorrichtung gemäß der Erfindung können besonders gute Ergebnisse hinsichtlich der Verarbeitung von Asbestzement-Material in umweltverträgliche Wertstoffe erzielt werden. Aufgrund der vorgenommenen Maßnahmen wird bereits im Vorfeld erreicht, daß möglichst wenige Feinanteile bei der groben Zerkleinerung des Ausgangsmaterials anfallen. Hierfür eignen sich in überraschender Weise besonders gut die Mehrwellen-Zerkleinerer bzw. Vierwellen-Zerkleinerer mit ihren schneidenden Schneidscheiben. Die damit erzielten Ergebnisse sind weitaus besser als die mit Brechern erreichten Resultate, die insbesondere mit den KunststoffUmhüllungen der Asbestzement-Materialien Probleme hatten.

Auf diese Weise wird ein besonders geringer Feinanteil von Asbestmaterial erzeugt, der dann nachdem Durchgang durch den thermischen Reaktor 30 in dem Rauchgas mitgerissen wird und anschließend in den Heißgasfiltern abgeschieden werden muß. Ein dennoch mitgerissener Feinanteil kann in diesen Heißgasfiltern 64 und 66 herausgefiltert und ggf. mit einem Bindemittel kompaktiert werden, das über den Kompaktierer 70 dann wieder in den Verarbeitungskreislauf eingeführt wird.

In der in Fig.1 der Zeichnung dargestellten Weise werden sämtliche Manipulationen mit dem asbestfaserhaltigen Material in Schwarzbereichen 100 und 200 mit entsprechender Unterdruckhaltung und Abgasfiltration untergebracht. Die an den Schwarzbereich 200 angeschlossene Saugventilatoreinrichtung 90 sorgt dabei in zuverlässiger Weise dafür, daß in den jeweiligen Bereichen ein relativer Unterdruck von 1 Millibar bis 3 Millibar gegenüber der Umgebungsatmosphäre eingestellt werden kann.

### Anwendungsbeispiel

Das in beispielsweise 10 Paketen in sogenannten Big Bags verpackt angelieferte Asbestzementmaterial mit Polyethylen-Umhüllung wird mit einem Durchsatz von 10 Tonnen pro Stunde Asbestzement in verpackter Form auf den Förderer 10 gesetzt und über die Schleuse 14 in den ersten Schwarzbereich 100 eingebracht. In diesem ersten Schwarzbereich 100 wird alle 5 Minuten ein derartiges Paket Asbestzementmaterial 12 in den Zerkleinerer 20 aufgegeben, wobei das zugeführte Asbestzementmaterial 12 auf eine maximale Größe der Bruchstücke von 140 mm Länge und 60 mm Breite bei einer Materialstärke von 8 mm zerkleinert wird. Dies erfolgt in der beschriebenen Weise mit den Schneidscheiben des Vierwellenzerkleinerers 20.

Anschließend wird das zerkleinerte Material über den Förderer 22 und den Behälter 24 in den thermischen Reaktor 30 eingebracht und dort auf die gewünschte Temperatur aufgeheizt, wie es vorstehend bereits erläutert ist. Die Verweilzeit bei einer Temperatur über 1000 °C beträgt zweckmäßigerweise mehr als eine Stunde. Der thermische Reaktor 30, bei dem es sich insbesondere um einen Drehrohrofen handeln kann, besitzt beispielsweise einen Innendurchmesser von 3 Metern und eine Länge von 30 Metern. Die Befeuerung des Drehrohrofens kann mit einer Erdgas-Zündflamme und einem Altöl/Altlösemittel-Brenner erfolgen.

Das gesinterte Produkt fällt dann am Ofenaustritt des Drehrohrofens 30 in eine Kühleinrichtung, nämlich die Kühleinrichtung 36, die mit entsprechender Kühlluft gekühlt wird, welche über eine Leitung 38 zugeführt wird. Auf diese Weise hat das Verfahrenserzeugnis am Austritt aus der Kühleinrichtung 36 nur noch eine Temperatur in der Größenordnung von etwa 100°C oder weniger und kann dann über die Fördereinrichtungen 40 und 44 in das Mahlwerk 46, beispielsweise eine Kugelmühle gefördert werden, in der es auf die entsprechende Feinheit gemahlen wird.

Parallel dazu wird das aus dem thermischen Reaktor 30 austretende Rauchgas in der Rauchgasbehandlungseinrichtung 60 sowohl einer mehrstufigen Feinfiltration als auch einer thermischen Nachbehandlung unterzogen. Nach dem Durchgang des Rauchgases durch die Heißgasfilter 64 und 66, die nachgeschaltete Brennkammer 76, den Wärmetauscher 78 und die redundant ausgebildeten Feinstfilter 80 und 82 mit jeweils zugehörigem Gebläse hat der Fasergehalt am Austritt aus der Vorrichtung lediglich noch einen minimalen Wert von weniger als 200 Fasern/m³ im Abgas. Diese Gebläse, die den Feinstfiltern 80 und 82 zugeordnet sind, bilden die Saugzug-Ventilatoreinrichtung 90, die für den erforderlichen Unterdruck in der gesamten Vorrichtung sorgt.

### Bezugszeichenliste

- 10: Förderer
- 12: Ausgangsmaterial
- 14: erste Schleuse
- 16: zweite Schleuse
- 18: Personalschleuse
- 20: Zerkleinerer
- 22: Förderer
- 24: Behälter
- 30: thermischer Reaktor
- 32: Leitung
- 34: Leitung
- 36: Kühleinrichtung
- 38: Leitung
- 40: Förderer
- 42: Zwischenbehälter
- 44: Förderer
- 46: Mahlwerk
- 48: Gebläse
- 50: Leitung
- 52: Behälter
- 60: Rauchgasbehandlungseinrichtung
- 62: Leitung
- 64: Heißgasfilter
- 66: Heißgasfilter
- 68: Leitung
- 70: Kompaktierer
- 72: Leitung
- 74: Leitung
- 76: nachgeschaltete Brennkammer
- 78: Wärmetauscher
- 80: Feinstfilter
- 82: Feinstfilter
- 84: Kamin
- 90: Saugzug-Ventilatoreinrichtung.

## Patentansprüche

1. Verfahren zur Verarbeitung von Asbestzement in umweltverträgliche Wertstoffe, wobei der Asbestzement unter Schwarzbereichsbedingungen mit Unterdruckhaltung grob zerkleinert und anschließend einer Hochtemperaturbehandlung zur Modifizierung der Gitterstruktur des Asbestanteils unterzogen wird,
**dadurch gekennzeichnet,**
**daß** der in Kunststoffgebinden verpackte Asbestzement (12) mitsamt der Kunststoffverpackung mit einem schneidenden Zerkleinerer (20) grob zerkleinert wird,
**daß** das grob zerkleinerte Material anschließend in einem thermischen Reaktor (30) bei einer Temperatur von bis zu 1400 °C dehydratisiert und gegebenenfalls decarbonatisiert wird
und **daß** das derart vorbehandelte Produkt danach abgekühlt (36) und gegebenenfalls fein zerkleinert (46) wird.

2. Verfahren nach Anspruch 1,
**dadurch gekennzeichnet,**
**daß** der verpackte Asbestzement (12) auf eine Stückgröße von 5 mm bis 150 mm, insbesondere etwa 10 mm bis 80 mm, grob zerkleinert wird.

3. Verfahren nach Anspruch 1 oder 2,
**dadurch gekennzeichnet,**
**daß** als Zerkleinerer ein Vierwellen-Zerkleinerer (20) mit Schneidscheiben eingesetzt wird, wobei jeweils eine Schneidscheibe zwischen Schneidscheiben gegenüberliegender Wellen eingreift.

4. Verfahren nach Anspruch 3,
**dadurch gekennzeichnet,**
**daß** die Schneidscheiben des Vierwellen-Zerkleinerers (20) einen Durchmesser von etwa 200 mm bis 300 mm und eine Stärke von etwa 20 mm bis 800 mm aufweisen und, über ihren Umfang verteilt, drei radial vorstehende Messer an ihrem Umfang tragen.

5. Verfahren nach einem der vorhergehenden Ansprüche,
**dadurch gekennzeichnet,**
**daß** die Behandlung im thermischen Reaktor (30) etwa 0,5 h bis 2 h, insbesondere etwa 0,75 h bis 1,25 h, lang durchgeführt wird.

6. Verfahren nach einem der vorhergehenden Ansprüche,
**dadurch gekennzeichnet,**
**daß** die Behandlung des Asbestmaterials im thermischen Reaktor (30) zur Einstellung der hydraulischen Eigenschaften des Verfahrenserzeugnisses bei einer Temperatur von mehr als 1000 °C, insbesondere bei einer Verweilzeit von etwa 1 h, im thermischen Reaktor (30) durchgeführt wird.

7. Verfahren nach einem der vorhergehenden Ansprüche,
**dadurch gekennzeichnet,**
**daß** die Behandlung des Asbestmaterials im thermischen Reaktor (30) in einem Temperaturbereich von 1150 °C bis 1300 °C, insbesondere einem Temperaturbereich von 1200 °C bis 1250 °C, erfolgt.

8. Verfahren nach einem der vorhergehenden Ansprüche,
**dadurch gekennzeichnet,**
**daß** als thermischer Reaktor (30) ein Drehrohrofen, ein Wirbelschichtreaktor, ein Reaktor mit einer Gas- oder Plasma-Flamme, ein Heißluft-Bandofen oder ein Etagenofen eingesetzt wird.

9. Verfahren nach einem der vorhergehenden Ansprüche,
**dadurch gekennzeichnet,**
**daß** das erhaltene Verfahrenserzeugnis auf eine Feinheit von 2500 bis 4000 Blaine fein zerkleinert bzw. gemahlen wird.

10. Verfahren nach Anspruch 9,
**dadurch gekennzeichnet,**
**daß** das Verfahrenserzeugnis mit einem Mahlwerk (46), insbesondere einer Kugelmühle oder einer Prallmühle fein zerkleinert bzw. gemahlen wird.

11. Verfahren nach einem der vorhergehenden Ansprüche,
**dadurch gekennzeichnet,**
**daß** der Verfahrensablauf vom Grobzerkleinern bis zur Behandlung im thermischen Reaktor (30) unter Schwarzbereichsbedingungen erfolgt, wobei dies unter einem anfänglichen Unterdruck von 1 mbar bis 3 mbar gegenüber der Umgebungsatmosphäre erfolgt.

12. Verfahren nach einem der vorhergehenden Ansprüche,
**dadurch gekennzeichnet,**
**daß** im thermischen Reaktor (30) gegenüber der Umgebungsatmosphäre ein Unterdruck von 1 mbar 1 bis 3 mbar eingestellt wird.

13. Verfahren nach einem der vorhergehenden Ansprüche,
**dadurch gekennzeichnet,**
**daß** sämtliche Manipulationen mit dem asbestfaserhaltigen Material unter Schwarzbereichsbedingungen durchgeführt werden.

14. Verfahren nach einem der vorhergehenden Ansprüche,
**dadurch gekennzeichnet,**
**daß** als Ausgangsmaterial ein Asbestzement-Ausgangsmaterial (12) in Großgebinden eingesetzt wird, insbesondere umhüllt mit Polyethylen als Big Bags.

15. Verfahren nach einem der vorhergehenden Ansprüche,
**dadurch gekennzeichnet,**
**daß** das Verfahrenserzeugnis auf etwa 50 °C bis 200 °C, insbesondere etwa 75 °C bis 90 °C abgekühlt wird.

16. Verfahren nach Anspruch 15,
**dadurch gekennzeichnet,**
**daß** in einer Kühleinrichtung (36), insbesondere einer Kühltrommel abgekühlt wird.

17. Verfahren nach einem der vorhergehenden Ansprüche,
**dadurch gekennzeichnet,**
**daß** in dem thermischen Reaktor (30), insbesondere in dem Drehrohrofen, Rauchgase mit einer Temperatur von etwa 400 °C bis 800 °C, insbesondere etwa 450 °C bis 550 °C, abgezogen werden, diese danach in einem Heißgasfilter (64, 66) von mitgerissenem Staub und Fasermaterial vorgereinigt und in einer nachfolgenden Brennkammer (76) mit einer Flamme bei etwa 800 °C bis 1000 °C, insbesondere etwa 850 °C bis 950 °C, nachverbrannt werden.

18. Verfahren nach Anspruch 17,
**dadurch gekennzeichnet,**
**daß** die Nachverbrennung bei mindestens etwa 900 °C mindestens etwa 2 Sekunden lang durchgeführt wird.

19. Verfahren nach Anspruch 17 oder 18,
**dadurch gekennzeichnet,**
**daß** die nachverbrannten Gase in einem Abhitzekessel/Wärmetauscher auf weniger als etwa 200 °C, insbesondere weniger als etwa 180 °C, abgekühlt und dann einer Feinfiltration unterzogen werden.

20. Verfahren nach Anspruch 19,
**dadurch gekennzeichnet,**
**daß** als Heißgasfilter (64, 66) ein Kerzenfilter mit Keramikfaserkerzen eingesetzt wird.

21. Vorrichtung zur Verarbeitung von Asbestzement, insbesondere stückigem Asbestzementmaterial, in umweltverträgliche Wertstoffe, in der der Asbestzement unter Schwarzbereichsbedingungen mit Unterdruckhaltung grob zerkleinert und anschließend einer Hochtemperaturbehandlung zur Modifizierung der Gitterstruktur seines Asbestanteils unterzogen wird,
**dadurch gekennzeichnet,**
**daß** die Vorrichtung folgendes aufweist:
- einen schneidenden Zerkleinerer (20), der das in Kunststoff-Gebinden verpackte Asbestzementmaterial (12) in einem Schwarzbereich (100, 200) durch eine Schleuse (14) von einem Förderer (10) erhält und grob zerkleinert,
- einen an den Schwarzbereich (200) angeschlossenen, nachgeschalteten thermischen Reaktor (30), insbesondere einen Drehrohrofen, in welchem das grob zerkleinerte Material im Gegenstrom zu den Brenngasen bei Temperaturen bis zu 1400 °C dehydratisiert und gegebenenfalls decarbonatisiert wird,
- eine Kühleinrichtung (36), in der das Material auf eine Temperatur unter 100 °C für die Weiterverarbeitung abgekühlt wird, und
- eine an den thermischen Reaktor (30) angeschlossene Rauchgasbehandlungseinrichtung (60), in der die Rauchgase gereinigt und einer thermischen Nachbehandlung unterzogen werden.

22. Vorrichtung nach Anspruch 21,
**dadurch gekennzeichnet,**
**daß** der Zerkleinerer ein Mehrwellenzerkleinerer, insbesondere ein Vierwellen-Zerkleinerer (20) ist.

23. Vorrichtung nach Anspruch 21 oder 22,
**dadurch gekennzeichnet,**
**daß** die Rauchgasbehandlungseinrichtung (60) ein Heißgasfilter (64, 66), eine nachgeschaltete Brennkammer (76) und daran anschließend einen Abhitzekessel bzw. einen Wärmetauscher (78) sowie eine Feinfiltrationseinheit (80, 82) aufweist.

24. Vorrichtung nach Anspruch 23,
**dadurch gekennzeichnet,**
**daß** das Heißgasfilter (64, 66) als Kerzenfilter mit Keramikfaserkerzen ausgebildet ist.
